Europäisches Patentamt

European Patent Office

Office européen des brevets

(11) Publication number: **0 510 421 A2**

# EUROPEAN PATENT APPLICATION

(21) Application number: **92106003.4**

(22) Date of filing: **07.04.92**

(51) Int. Cl.5: **G09G 3/34**

(30) Priority: **24.04.91 IT TO910310**

(43) Date of publication of application:
**28.10.92 Bulletin 92/44**

(84) Designated Contracting States:
**DE ES FR GB**

(71) Applicant: **VEGLIA BORLETTI S.r.l.**
**Via Adriano, 81**
**I-20128 Milano(IT)**

(72) Inventor: **Pairetti Bartolomeo**
**Via Vigliani, 15/10**
**10100 Torino(IT)**
Inventor: **Caruso, Pietro**
**Via Ticino, 13**
**20012 Cuggiono(IT)**

(74) Representative: **Cerbaro, Elena et al**
**c/o Studio Torta, Via Viotti 9**
**I-10121 Torino(IT)**

(54) **Multi-coloured light indicator.**

(57) A multi-coloured light indicator including having a light guide (2) constituted essentially by a block of transparent material possibly surface-treated in various ways, a diffuser element (3) located substantially adjacent a lower surface of the light guide (2), at least two illuminator elements (4',5') located close to respective side portions of the light guide (2) and arranged to emit light of respective different colours, reflective devices (8) located adjacent the illuminator elements (4',5') for directing the light towards the light guide (2) itself, and a piloting circuit (9) able to cause the switching on of one and/or the other of the illuminator elements (4',5').

Fig.1

The present invention relates to a multi-coloured indicator.

More particularly, the present invention relates to back-lighting apparatus usable for illuminating liquid crystal displays from the back with different coloured lights, but may also be used to form light indicators of any type usable for example in motor vehicles, and able to emit light of different colours.

It is known that both back-lighting apparatus for liquid-crystal displays and the coloured indicators used in vehicles to provide indications of the operation of various components of the vehicle itself are usually able to emit light of only one colour and therefore, in order to provide indictions denoting the proper operation and partially defective or completely defective operation of specific apparatus, it is necessary to provide several indicator lights of different colours. It is in fact usual to indicate a serious operational fault by the switching on of a red indicator light while regular operation or operation which is only partly defective is usually indicated by the switching on of a green or a yellow indicator respectively. Naturally, the need to provide a considerable number of indicator lights in vehicles means that the vehicles' drivers, seeing the signals, are less able to interpret them immediately and also involves considerable expense.

The object of the present invention is to provide a light indicator which is able to eliminate the disadvantages described with reference to the prior art, that is, which is able, for example, to emit light signals of different colours to display various operative situations of the various pieces of equipment of a vehicle.

Accordingly, the present invention provides a multi-coloured light indicator characterised in that it includes a light guide constituted essentially by a block of transparent material, at least two illuminator means located close to respective portions of the light guide and arranged to emit light of respective different colours, and a piloting circuit able to cause the switching on of one and/or the other of the illuminator means.

The present invention will now be described, purely by way of non-limiting example, with reference to the appended drawings, in which:

Figure 1 is a plan view of a light indicator formed in accordance with the principles of the present invention; and

Figure 2 is a sectional view, taken on the line II-II of Figure 1, showing the light indicator of Figure 1.

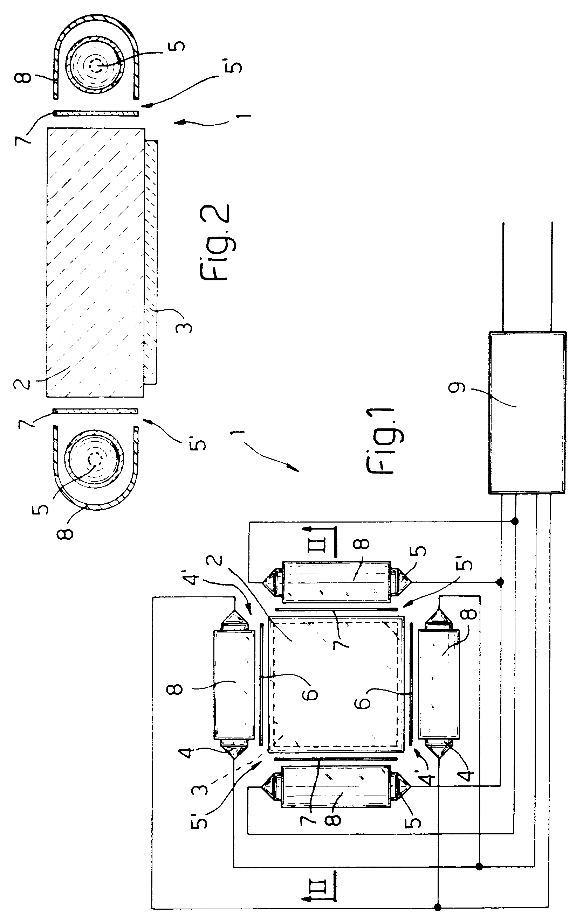

With reference to Figures 1 and 2, a light indicator generally indicated 1 is usable both for back-lighting a liquid crystal display (not illustrated) with different colours and for emitting a variably coloured light signal directly.

The light indicator 1 includes a light guide 2 of known type preferably made from colourless transparent plastics material of substantially parallelepipedal shape, a lower, major face whereof is ground, painted white and stuck to a diffuser element 3 of known type for the purpose, which will be clarified below, of diffusing the light better through the light guide 2 itself.

Four incandescent lamps or light sources are arranged in opposing pairs 4 and 5 respectively against the minor side faces of the light guide 2. Between the light guide 2 and each of the lamps 4, which are located at the top and at the bottom respectively in Figure 1, there is a transparent, green heat filter 6 while between the light guide 2 and each of the lamps 5, which are to the left and to the right respectively in Figure 1, is a transparent, red heat filter 7. The assemblies constituted by the lamps 4 and 5 and their respective heat filters 6 and 7 will be termed the illuminator means below and indicated 4' and 5' respectively.

As illustrated particularly in Figure 2, a portion of each of the lamps 4 and 5 which is not adjacent the respect filter 6 or 7 is partially surrounded by a reflective element 8 which is able to direct the light towards the light guide 2. Each of the lamps 4 and 5 is connected by electrical conductors to a piloting circuit 9 of known type which is able to cause either the switching on of the lamps 4 or 5 only or the simultaneous switching on of all four lamps 4 and 5 according to requirements and for reasons which will be clarified below.

More precisely, with reference to Figure 1, the two lamps 4 and the two lamps 5 are connected in pairs in parallel to the output of the piloting circuit 9, the input of which receives one or other of two logic signals or both these signals to cause the switching on of the pairs of lamps 4 or 5 or the switching on of all of the lamps 4 and 5, respectively, as stated above.

In use, the switching on of the pair of lamps 4 by means of the piloting circuit 9 causes the light guide 2 of the light indicator 1 to emit green light while the switching on of the pair of lamps 5 causes the light guide to emit red light. Clearly these light signals may be used to indicate to an observer of the light indictor 1 either a normal situation or an emergency situation respectively. The switching on of all of the lamps 4 and 5 however, by the superposition of colours, causes the light indicator 1 to emit yellow light which may be used to indicate a defective but not serious situation.

Naturally, whenever it were wished to make the light indicator 1 emit different colours from those considered, it would suffice to use filters 6 and 7 of colours corresponding to the colours to be obtained, so that, when the lamps 4 and 5 are lit simultaneously, the light indicator 1 emits light of a colour which results from the superposition of the the colours of the filters 6 and 7.

One should note that the filters 6 and 7 could even be transparent and colourless if the lamps 4 and 5 were coloured in the desired manner. Finally one should note that there could be a different number of lamps 4 and 5 from that considered.

From the above it is clear that the light indicator 1 fully achieves the predetermined purposes since, being adapted to emit light signals of different colours, it is able completely to eliminate the disadvantages described with reference to the prior art

Finally it is stressed that the coloured light may be achieved in the following three ways: a) with the use of light sources which are themselves coloured; b) with the use of coloured heat filters 6,7; c) with the use of coloured filters in addition to the heat filters 6,7.

**Claims**

1. A multi-coloured light indicator characterised in that it includes a light guide (2) constituted essentially by a block of transparent material, at least two illuminator means (4',5') located close to respective portions of the light guide (2) and arranged to emit light of different colours, and a piloting circuit (9) able to cause the switching on of one and/or the other of the illuminator means (4',5').

2. An indicator according to Claim 1, characterised in that it includes a diffuser element (3) located substantially adjacent a portion of the light guide (2).

3. An indicator according to Claim 1 or 2, characterised in that it includes reflective means (8) located adjacent the illuminator means (4',5') and arranged to direct the light towards the light guide (2) itself.

4. A light indicator according to one of Claims 1 to 3, characterised in that four illuminator means (4',5') are provided, these illuminator means (4',5') being arranged in pairs adapted to emit light of the same colour on opposite sides of the light guide (2).

5. A light indicator according to one of Claims 1 to 4, characterised in that the light guide (2) has a substantially parallelepipedal form.

6. A light indicator according to any one of the preceding claims, characterised in that each of the illuminator means includes a light source (4,5) and a heat filter (6,7) located between the light source (4,5) and the light guide (2).

7. A light indicator according to Claim 5, characterised in that the heat filters (6,7) are coloured with the colour which is to be emitted by the respective illuminator means (4,5).

8. A light indicator according to any one of the preceding claims, characterised in that it is constituted by back-lighting apparatus usable to illuminate a liquid crystal display with different coloured lights from the back.

9. A light indicator according to any one of the preceding claims, characterised in that the illuminator means (4',5') which emit light of different colours emit green and red lights respectively.

Fig.2

Fig.1